(19) Europäisches Patentamt
European Patent Office
Office européen des brevets

(11) **EP 0 683 178 B1**

(12) **EUROPÄISCHE PATENTSCHRIFT**

(45) Veröffentlichungstag und Bekanntmachung des Hinweises auf die Patenterteilung:
**09.09.1998 Patentblatt 1998/37**

(51) Int Cl.$^6$: **C08F 10/00**, C08F 4/658

(21) Anmeldenummer: **95106803.0**

(22) Anmeldetag: **05.05.1995**

(54) **Verfahren zur Herstellung einer Katalysatorkomponente für die Polymerisation von Ethylen und 1-Olefinen zu ultrahochmolekuloren Ethylenpolymeren**

Process for the preparation of a catalyst component for the polymerization of ethylene with olefins into ultra high molecular weight polyethylene

Procédé de préparation d'un composant catalytique pour la polymérisation d'éthylène et d'oléfines en polyéthylène de poids moléculaire ultra élevé

(84) Benannte Vertragsstaaten:
**BE DE ES FR GB NL**

(30) Priorität: **19.05.1994 DE 4417475**

(43) Veröffentlichungstag der Anmeldung:
**22.11.1995 Patentblatt 1995/47**

(73) Patentinhaber: **Ticona GmbH**
**65926 Frankfurt am Main (DE)**

(72) Erfinder:
• **Bilda, Dieter, Dr.**
**D-65929 Frankfurt (DE)**
• **Böhm, Ludwig, Dr.**
**D-65795 Hattersheim (DE)**

(56) Entgegenhaltungen:
**EP-A- 0 030 742**     **EP-A- 0 043 582**
**EP-A- 0 243 327**     **EP-A- 0 522 650**
**EP-A- 0 563 815**     **WO-A-84/04925**
**WO-A-92/00332**

**Beschreibung**

Die Erfindung bezieht sich auf ein Verfahren zur Herstellung einer hochaktiven Katalysatorkomponente für die Niederdruckpolymerisation und -copolymerisation von Ethylen mit 1-Olefinen zu ultrahochmolekularen Ethylenpolymeren mit einer Molmasse $M_W$ gleich oder größer $1 \cdot 10^6$ g/mol.

Es ist bekannt, hochmolekulares Polyethylen im Niederdruckverfahren mit ZIEGLER-Katalysatoren zu synthetisieren, indem man Katalysatoren verwendet, die durch Umsetzung von Verbindungen der Elemente der IV. bis VI. Nebengruppe des Periodensystems mit metallorganischen Verbindungen der 1. bis III. Hauptgruppe des Periodensystems hergestellt werden. Die Wirksamkeit dieser Katalysatoren läßt sich durch eine Trägerung der Übergangsmetallkomponente wesentlich erhöhen. Als Trägermaterialien finden unter anderem Kieselgele, organische Feststoffe und anorganische Salze Verwendung. Eine besonders starke Erhöhung der katalytischen Aktivität wurde durch eine Fixierung auf $MgCl_2$-Trägern erreicht, da die Gitterstruktur dieses Salzes einen optimalen Einbau der Titanverbindung gestattet. Dabei kann durch die Art der Herstellung des $MgCl_2$ Einfluß auf dessen Oberfläche genommen werden, die für hochaktive Ziegler-Katalysatoren bei > 60 m$^2$/g liegen sollte.

Ultrahochmolekulares Polyethylen gelangt als feinkörniges Pulver zum Verarbeiter, wo es hauptsächlich durch Preßsintern und Ramextrusion zu Platten und Stäben verarbeitet wird. Daher spielen neben molekularen Eigenschaften wie Molmasse und Molmassenverteilung morphologische Eigenschaften der hochmolekularen Produkte, wie beispielsweise Korngröße, Korngrößenverteilung, und Schüttdichte eine entscheidende Rolle.

Bekannt ist ein Katalysator, der durch Umsetzung von wasserfreiem $MgCl_2$ mit Ethanol, Diethylaluminiumchlorid und Titantetrachlorid hergestellt wird und bei Polymerisationstemperaturen von unterhalb 50°C ultrahochmolekulares Polyethylen mit einer intrinsischen Viskosität (IV) von > 2700 cm$^3$/g erzeugt (vgl. US 4 933 393).

Weiterhin ist ein Katalysator beschrieben worden, bei dem zwei verschiedene Titanverbindungen auf einen organischen Träger aufgebracht werden, und mit welchem bei einer Temperatur von 80°C Polyethylen mit einer Molmasse $M_W$ von ca. $2 \cdot 10^6$ g/mol hergestellt werden kann, was einer intrinsischen Viskosität (IV) von ca. 1500 cm$^3$/g entspricht (vgl. DD 282 013).

Ultrahochmolekulares Polyethylen mit enger Korngrößenverteilung kann auch mit einem Katalysator hergestellt werden, der auf sauerstoffhaltigen anorganischen Mg-Verbindungen basiert (vgl. EP 349 146). Bei Polymerisationstemperaturen von 55°C bis 75°C werden IV-Werte im Bereich von 1000 bis 2500 cm$^3$/g erhalten. Die mittleren Korngrößen liegen zwischen 190 und 240 µm.

Beschrieben wurde ein Katalysatorsystem zur Herstellung von ultrahochmolekularem Polyethylen, das durch den Einsatz löslicher Titanester zu Polymeren mit enger Korngrößenverteilung und definierter Korngröße führt (vgl. EP 523 657). Die IV-Werte liegen im Bereich von 1000 bis 2500 cm$^3$/g. Im Verlauf der Katalysatorsynthese werden jedoch Wasch- und Trockenstufen erforderlich.

EP-A-0 043 582 beschreibt ein Verfahren zum Herstellen einer Katalysatorkomponente zur Polymerisation von alpha-Olefinen, wobei in einer ersten Reaktionsstufe (a) eine organische Magnesiumverbindung mit einem Kohlenstoff haltigen Halogenierungsagens zu einem Katalysatorträger umgesetzt wird, und der Katalysatorträger in einer zweiten Reaktionsstufe (b) mit beispielsweise Titantetrachlorid und Ethylaluminiumsesquichlorid in einem inerten Kohlenwasserstoff zur Reaktion gebracht wird und anschließend der so gebildete Feststoff mit einem Peroxid behandelt wird.

Schließlich wird ein Katalysator zur Herstellung von ultrahochmolekularem Polyethylen beschrieben, der durch Umsetzung von $MgCl_2$ mit einer Alkoxytitan-Verbindung und einem Aluminiumtrihalogenid hergestellt werden kann (vgl. EP 574 153). Bei einer Polymerisationstemperatur von 65°C werden jedoch nur IV-Werte < 2000 cm$^3$/g erhalten.

Um den Nachteil der oft zu grobkörnig anfallenden Polymerisate zu beseitigen, wurden aufwendige Mahlprozesse für das Polyethylen vorgeschlagen (vgl. US 3 847 888). Die gemahlenen Produkte weisen jedoch eine irreguläre Form und eine relativ breite Korngrößenverteilung auf.

Aufgabe der Erfindung war es, ein hochaktives Katalysatorsystem zu entwickeln, das in der Lage ist, ultrahochmolekulare Ethylenpolymere bei Polymerisationstemperaturen > 70°C mit enger Korngrößenverteilung und einem mittlerem Korndurchmesser im Bereich von 100 bis 200 µm herzustellen. Die Katalysatorsynthese soll dabei in einer Eintopfreaktion, d.h. ohne intermediäre Trenn-, Wasch- und Trocknungsstufen, durchführbar sein.

Diese Aufgabe wird erfindungsgemäß gelöst, indem in der ersten Stufe der Katalysatorherstellung ein Feststoff synthetisiert wird, der das Umsetzungsprodukt einer Dialkylmagnesiumverbindung mit einem Halogenierungsagens ist und der eine mittlere Korngröße < 10 µm bei gleichzeitig enger Korngrößenverteilung aufweist.

Die Erfindung betrifft somit ein Verfahren zur Herstellung einer Katalysatorkomponente zur Polymerisation und Copolymerisation von Ethylen und 1-Olefinen zu ultrahochmolekularen Ethylenhomo- oder Copolymeren in Suspension oder in der Gasphase, dessen Kennzeichenmerkmale darin zu sehen sind, daß in einer ersten Reaktionsstufe (a) eine Magnesiumverbindung der Formel I

$$R^1 - Mg - R^2 \qquad\qquad (I),$$

worin $R^1$ und $R^2$ gleich oder verschieden sind und einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeuten, mit einem Halogenierungsagens der Formel II

$$X_n - C - R^3 \qquad\qquad (II),$$

worin X ein Halogenatom, n = 3 ist und $R^3$ ein Wasserstoffatom, ein Halogenatom, einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeutet, zu einem Katalysatorträger, überwiegend bestehend aus einer Verbindung der Formel III

$$X - Mg - X \qquad\qquad (III),$$

worin X die vorgenannte Bedeutung hat, umgesetzt wird, daß der Katalysatorträger in einer zweiten Reaktionsstufe (b) mit einer in Kohlenwasserstoffen löslichen Titanverbindung der Formel IV

$$R^4{}_m - Ti - R^5{}_{4-m} \qquad\qquad (IV),$$

worin $R^4$ und $R^5$ gleich oder verschieden sind und ein Halogenatom, eine $C_1$-$C_6$-Alkoxygruppe oder einen $C_1$-$C_{20}$-Carboxyrest bedeuten und m eine Zahl von 0 bis 4 ist, in einem inerten Kohlenwasserstoff bei einer Temperatur von 0 bis 100°C im Molverhältnis Ti : Mg von 0,01 bis 1 zur Reaktion gebracht wird, wobei eine Elektronendonatorverbindung bei einer der Reaktionsstufen (a) oder (b) in einer Menge von 0,01 bis 1 mol je mol Magnesiumverbindung zugegen ist, und daß in einem abschließenden Reaktionsschritt (c) die gelöste Titanverbindung durch Reduktion mit einem Aluminiumalkyl auf dem Katalysatorträger niedergeschlagen wird.

Bekannt ist, daß die Viskositätszahl, die zur Charakterisierung des Polymerisationsgrades benutzt wird, eine reziproke Funktion der Polymerisationstemperatur ist und den Quotienten aus Kettenwachstums- und Kettenabbruchgeschwindigkeit widerspiegelt. Dieses Geschwindigkeitsverhältnis ist spezifisch für jedes Katalysatorsystem.

Bei der Lösung dieser Aufgabe wurde desweiteren vorausgesetzt, daß ein Katalysatorteilchen ein Polymerteilchen erzeugt und daß das Wachstum kugelförmig erfolgt (Multigrain-Modell). Daraus folgt, daß der Katalysatorteilchendurchmesser durch die Produktivität (KA), die größer als 20 kg PE/mmol Ti sein soll, auf Werte < 10 µm begrenzt wird (Polymer: 32 (1991) 181).

Zur Herstellung der erfindungsgemäßen Katalysatorkomponente wird eine Magnesiumverbindung der Formel I

$$R^1 - Mg - R^2 \qquad\qquad (I),$$

in der $R^1$ und $R^2$ gleich oder verschieden sind und vorzugsweise einen $C_2$-$C_8$-Alkylrest, einen $C_6$-$C_8$-Cycloalkylrest, einen $C_6$-$C_{10}$-Arylrest oder einen $C_2$-$C_8$-Alkenylrest bedeuten, eingesetzt.

Diese Magnesiumverbindung wird umgesetzt mit einem Halogenierungsagens der Formel II

$$X_n - C - R^3 \qquad\qquad (II),$$

worin X vorzugsweise Cl bedeutet, n = 3 ist und $R^3$ ein Wasserstoffatom, ein Halogenatom, vorzugsweise einen $C_2$-$C_8$-Alkylrest, einen $C_6$-$C_8$-Cycloalkylrest, einen $C_6$-$C_{10}$-Arylrest oder einen $C_2$-$C_8$-Alkenylrest, bedeutet.

Die Umsetzung wird in einem Kohlenwasserstoff mit 4 bis 12 C-Atomen oder einem Gemisch derartiger Kohlenwasserstoffe durchgeführt. Geeignete Kohlenwasserstoffe sind beispielsweise Butane, Hexane, Octane, Decane, Cyclohexane und Benzinfraktionen, die diese Kohlenwasserstoffe enthalten.

Man erhält ein festes Produkt, überwiegend bestehend aus einer Verbindung der Formel III, welches als Katalysatorträger dient:

$$X - Mg - X \qquad\qquad (III)$$

Die spezifische Oberfläche des erfindungsgemäß besonders geeigneten $MgCl_2$ wurde nach der Methode von Brunauer, Emmett und Teller (BET-Methode) mit 68 $m^2$/g bestimmt. Das Pulver-Röntgendiffraktions-Spektrum weist die für ein $MgCl_2$, welches aus einer Reaktion einer Grignard-Verbindung mit einem Chlorierungsagenz erhalten wird, typischen Reflexe auf.

Für die Lösung der Aufgabe erweist sich der Einsatz einer Elektronendonatorverbindung als notwendig. Diese Verbindung erfüllt zwei Aufgaben. Erstens erhöht sie die Titanfixierung auf dem Träger, zweitens erniedrigt sie die Elektrophilie des Übergangsmetalls und führt so zu höheren Molmassen der Polymeren. Geeignete Donatorverbindungen sind neben Estern von Carbonsäuren Ether, Ketone, Amide, Alkohole sowie sauerstoffhaltige Phosphor- und Schwefelverbindungen. Typische Ester sind beispielsweise Alkylbenzoate, Alkylphthalate und Alkylanisate.

Vorzugsweise wird die Elektronendonatorverbindung vor der Fixierung der Titanverbindung mit dem Katalysatorträger (III) umgesetzt. Es ist jedoch auch möglich, Katalysatorträger, Donator und Titanverbindung gleichzeitig umzusetzen oder die Titanverbindung als Addukt mit dem Elektronendonator mit dem Katalysatorträger reagieren zu lassen.

Der Gehalt an Donatorkomponente beträgt 0,01 bis 1, vorzugsweise 0,05 bis 0,5 mol je mol Magnesium. Das Molverhältnis zwischen Elektronendonator und Titan-verbindung liegt im Bereich von 0,1 bis 10, vorzugsweise von 0,5 bis 1,5.

Das Addukt des Katalysatorträgers (III) mit dem Elektronendonator wird mit einer in Kohlenwasserstoffen löslichen Titanverbindung der Formel IV

$$R^4{}_m - Ti - R^5{}_{4-m} \qquad \text{(IV)}$$

worin $R^4$ und $R^5$ gleich oder verschieden sind und vorzugsweise Cl, eine $C_1$-$C_4$-Alkoxygruppe oder einen $C_1$-$C_8$-Carboxyrest bedeuten und m eine Zahl von 0 bis 4 ist, umgesetzt. Die Reaktion findet in einem inerten Kohlenwasserstoff bei einer Temperatur von 0 bis 100°C statt. Das Molverhältnis von fixiertem Ti : Mg liegt vorzugsweise im Bereich von 0,02 bis 0,2. In dem abschließenden Reaktionsschritt wird die nicht umgesetzte, gelöste Titanverbindung durch Reduktion mit einer Aluminiumalkylverbindung der Formel $AlR^6{}_nR^7{}_{3-n}$, wobei $R^6$ gleiche oder verschiedene Alkyl- oder Arylreste mit jeweils 1 bis 20 Kohlenstoffatomen und $R^7$ Halogen und/oder Wasserstoff, Alkoxy- und/oder Siloxyreste mit 1 bis 20 Kohlenstoffatomen sein können, wobei n eine ganze Zahl von 0 bis 3 ist, in eine in Kohlenwasserstoffen unlösliche Form überführt und so auf dem Katalysatorträger fixiert.

Beispiele für bevorzugte Verbindungen dieser Art sind $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$ sowie $(C_2H_5)_2AlCl$, $(iC_4H_9)_2AlCl$, $(C_2H_5)_3Al_2Cl_3$.

Man erhält so die Katalysatorkomponente A.

Die Komponente A kann als Suspension direkt mit der Komponente B umgesetzt werden; sie kann jedoch auch zunächst als Feststoff isoliert, gelagert und zur späteren Weiterverwendung wieder suspendiert werden.

Als Komponente B werden vorzugsweise aluminiumorganische Verbindungen verwendet. Als aluminiumorganische Verbindungen eignen sich chlorhaltige aluminiumorganische Verbindungen, die Dialkylaluminiummonochloride der Formel $R^8{}_2AlCl$ oder Alkylaluminiumsesquichloride der Formel $R^8{}_3Al_2Cl_3$, worin $R^8$ ein Alkylrest mit 1 bis 16 Kohlenstoffatomen ist.

Als Beispiele seien genannt $(C_2H_5)_2AlCl$, $(iC_4H_9)_2AlCl$, $(C_2H_5)_3Al_2Cl_3$. Es können auch Gemische dieser Verbindungen eingesetzt werden.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eigenen sich als solche chlorfreie aluminiumorganische Verbindungen Aluminiumtrialkyle oder Aluminiumdialkylhydride der Formel $AlR^8{}_3$, in denen $R^8$ die obengenannte Bedeutung hat. Beispiele sind $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Es können auch Mischungen von metallorganischen Verbindungen von Metallen der I., II. oder III. Gruppe des Periodensystems, insbesondere Mischungen verschiedener aluminiumorganischer Verbindungen eingesetzt werden. Beispielsweise seien folgende Mischungen genannt:

$Al(C_2H_5)_3$ und $Al(iC_4H_9)_3$, $Al(C_2H_5)_2Cl$ und $Al(C_8H_{17})_3$, $Al(C_2H_5)_3$ und $Al(C_8H_{17})_3$, $Al(C_4H_9)_2H$ und $Al(C_8H_{17})_3$, $Al(iC_4H_9)_3$ und $Al(C_8H_{17})_3$, $Al(C_2H_5)_3$ und $Al(C_{12}H_{25})_3$,

$Al(iC_4H_9)_3$ und $Al(C_{12}H_{25})_3$, $Al(C_2H_5)_3$ und $Al(C_{16}H_{33})_3$, $Al(C_3H_7)_3$ und $Al(C_{18}H_{37})_2(iC_4H_9)$, $Al(C_2H_5)_3$ und Aluminiumisoprenyl (Umsetzungsprodukt von Isopren mit $Al(iC_4H_9)_3$ oder $Al(iC_4H_9)_2H$).

Das Mischen der Komponente A und der Komponente B kann vor der Polymerisation in einem Rührkessel bei einer Temperatur von -30 bis 150°C, vorzugsweise -10 bis 120°C erfolgen. Es ist auch möglich, die beiden Komponenten direkt im Polymerisationskessel bei einer Temperatur von 20 bis 200°C zu vereinigen. Die Zugabe der Komponente B kann jedoch auch in zwei Schritten erfolgen, indem vor der Polymerisationsreaktion die Komponente A mit einem Teil der Komponente B bei einer Temperatur von -30 bis 150°C voraktiviert wird und die weitere Zugabe der Komponente B in den Polymerisationsreaktor bei einer Temperatur von 20 bis 200°C erfolgt.

Der erfindungsgemäß hergestellte Polymerisationskatalysator wird zur Polymerisation von 1-Olefinen der Formel $R^9$-CH = CH$_2$, in der $R^9$ ein Wasserstoffatom oder einen Alkylrest mit 1 bis 10 C-Atomen bedeutet, eingesetzt, beispielsweise Ethylen, Propylen, 1-Buten, 1-Hexen, 4-Methyl-1-penten, 1-Octen.

Vorzugsweise wird Ethylen allein oder als Gemisch von mindestens 90 Gew.-%, insbesondere mindestens 95 Gew.-% Ethylen und maximal 10 Gew.-%, insbesondere maximal 5 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente A in einer Konzentration, bezogen auf Übergangsmetall, von 0,0001 bis 1 mmol, vorzugsweise 0,0005 bis 0,1 mmol Übergangsmetall pro dm$^3$ Dispergiermittel eingesetzt. Die metallorganische Verbindung (Komponente B) wird in einer Konzentration von 0,1 bis 5 mmol, vorzugsweise 0,5 bis 4 mmol, pro dm$^3$ Dispergiermittel verwendet. Prinzipiell sind aber auch höhere Konzentrationen möglich.

Die Suspensionspolymerisation wird in einem für das Ziegler-Niederdruck-Verfahren gebräuchlichen inerten Dispergiermittel durchgeführt, beispielsweise in einem aliphatischen oder cycloaliphatischen Kohlenwasserstoff; als solche seien beispielsweise Butan, Pentan, Hexan, Heptan, Isooctan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird durch Temperatur oder durch Kettenabbruchreagenzien geregelt, vorzugsweise wird dazu Wasserstoff verwendet.

Ein Vorteil des erfindungsgemäßen Verfahrens besteht darin, daß mittels der erfindungsgemäß hergestellten Katalysatorkomponente A Polymere mit einem mittleren Korndurchmesser von 50 bis 200 µm vorzugsweise 100 bis 200 µm hergestellt werden können und daß dieser mittlere Korndurchmesser durch den Katalysatorpartikeldurchmesser und durch die Katalysatorproduktivität eingestellt werden kann.

Außerdem kann ultrahochmolekulares Polyethylen mit einer Viskositätszahl von größer als 2000 cm$^3$/g hergestellt werden.

Die folgenden Beispiele erläutern die Erfindung.

Es bedeuten:

| KA | Katalysatorproduktivität | [kg PE/mmol Til] |
|---|---|---|
| KZA$_{red}$ | Reduzierte Katalysator-Zeit-Ausbeute [kg PE/mmolTi.h.bar] | |
| d$_{50}$ | Mittlere Teilchengröße | [µm] |
| SD | Polymerschüttdichte (gemessen nach DIN 53 468) | [g/dm$^3$] |
| VZ | Viskositätszahl (gemessen nach DIN 53 728) | [cm$^3$/g] |
| D$_m$ | Massenmittel des Durchmessers | |
| D$_n$ | Zahlenmittel des Durchmessers | |

Für die Versuche wurde eine Benzinfraktion mit einem Siedebereich von 90 bis 120°C eingesetzt.

Die mittlere Korngröße und die Korngrößenverteilung der Katalysator- und Polymerteilchen wurden mittels Malvern-Laserlichtbeugung bestimmt. Das Verhältnis D$_m$/D$_n$ wurde nach NF X 11-630 vom Juni 1981 bestimmt:

$$D_m = [\Sigma\, n_i(d_i)^3 d_i]/[\Sigma n_i(d_i)^3]$$

$$D_n = [\Sigma n_i d_i]/\Sigma n_i$$

Beispiel 1

a) Herstellung der Katalysatorkomponente A

Zu einer Lösung von 0,15 mol n-Butyl-n-octylmagnesium (BOMAG-A der Fa.WITCO; 20 %ig in Heptan) in 100 cm$^3$ dickflüssigem Paraffin (dynamische Viskosität 110 bis 230 mPa·s) wurden unter Inertbedingungen innerhalb einer Stunde bei 65°C 0,15 mol Tetrachlormethan in 50 cm$^3$ der Benzinfraktion getropft. Die Rührgeschwindigkeit betrug 600 rpm. Es bildete sich ein brauner, feindisperser Feststoff. Man rührte den Ansatz noch eine halbe Stunde bei 85°C und erhielt die Suspension $A_1$.

Anschließend wurden 0,05 mol Diisobutylphthalat, gelöst in 20 cm$^3$ der Benzinfraktion, als Elektronendonor zur Suspension $A_1$ getropft und das Gemisch eine halbe Stunde bei 80°C gerührt. Man erhielt die Suspension $A_2$.

Titantetrachlorid (0,02 mol), in 50 cm$^3$ der Benzinfraktion gelöst, wurde innerhalb einer Stunde bei einer Reaktionstemperatur von 85°C zur Suspension $A_2$ getropft (Suspension $A_3$). Die dunkelbraune Suspension wurde noch 2 h bei 80°C gerührt und dann auf Raumtemperatur abgekühlt. Unter Rühren werden 0,020 mol Äthylaluminiumsesquichlorid, gelöst in 30 cm$^3$ der Benzinfraktion, zudosiert. Die Suspension wurde 1 Stunde bei 70°C gerührt und anschließend 3 mal mit 0,5 dm$^3$ der Benzinfraktion gewaschen.

Der Titangehalt der Katalysatorsuspension betrug 41,5 mmol/dm$^3$. Das Verhältnis Titan / Magnesium wurde mit 0,13 bestimmt. Die Katalysatorteilchen wiesen nach lichtmikroskopischen Messungen einen mittleren Durchmesser von 9,5 μm auf. Der Quotient $D_m/D_n$ betrug 1,16.

b) Polymerisation

Die Polymerisation von Ethylen wurde in einem 1,5 dm$^3$-Laborautoklaven in 800 cm$^3$ der Benzinfraktion bei einer Rührerdrehzahl von 750 rpm isobar bei einem Ethylenpartialdruck von 4 bar während eines Zeitraums von 2 Stunden durchgeführt. Die Polymerisationstemperatur betrug 80°C. Als Cokatalysator wurden 1,5 mmol Triisobutyl-aluminium eingesetzt.

Die Suspension der Katalysatorkomponente A wurde auf eine Konzentration von 1 mmol Ti/dm$^3$ verdünnt. Von dieser verdünnten Suspension wurden 3 cm$^3$ zur Polymerisation verwendet.

Die Reaktion wurde durch Entspannen und Abkühlen beendet und das Polymere durch Filtration und Trocknen vom Dispergiermittel abgetrennt. Man erhielt 152 g Polyethylen entsprechend einer KA von 51 kg PE/mmol Ti und einer $KZA_{red}$ von 6,3 kg PE/mmol Ti·h·bar. Die VZ betrug 2900 cm$^3$/g, das Produkt hatte eine Schüttdichte von 370 g/dm$^3$ und einen $d_{50}$-Wert von 182 μm.
Der Quotient $D_m/D_n$ betrug 1,16.

Beispiel 2

a) Herstellung der Katalysatorkomponente A

Zu einer Lösung von 0,3 mol einer 0,6 molaren Lösung von n-Bu$_2$Mg in Octan, hergestellt durch eine Grignard-Reaktion von n-BuCl und Magnesiumpulver unter anschließender Abtrennung des Feststoffes, wurden unter Inertbedingungen innerhalb einer Stunde bei 65°C 0,3 mol Tetrachlormethan in 50 cm$^3$ der Benzinfraktion getropft. Die Rührgeschwindigkeit betrug 600 rpm. Es bildete sich ein brauner, feindisperser Feststoff. Man rührte den Ansatz noch eine halbe Stunde bei 85°C und erhielt die Suspension $A_1$.

Anschließend wurden 0,10 mol n-Butanol, gelöst in 20 cm$^3$ der Benzinfraktion, als Elektronendonor zur Suspension $A_1$ getropft und das Gemisch eine halbe Stunde bei 80°C gerührt. Man erhielt die Suspension $A_2$.

Titantetrachlorid (0,05 mol), in 50 cm$^3$ der Benzinfraktion gelöst, wurde innerhalb einer Stunde bei einer Reaktionstemperatur von 85°C zur Suspension $A_2$ getropft (Suspension $A_3$). Die dunkelbraune Suspension wurde noch 2 h bei 90°C gerührt und dann auf Raumtemperatur abgekühlt. Unter Rühren wurden 0,050 mol Aluminiumtriethyl, gelöst in 30 cm$^3$ der Benzinfraktion, zudosiert. Die Suspension wurde 1 Stunde bei 70°C gerührt und anschließend 3 mal mit 0,5 dm$^3$ der Benzinfraktion gewaschen.

Der Titangehalt der Katalysatorsuspension betrug 48,5 mmol/dm$^3$. Die Katalysatorteilchen wiesen nach licht-mikroskopischen Messungen einen mittleren Durchmesser von 8,9 μm auf.

b) Polymerisation

Die Polymerisation wurde wie im Beispiel 1 durchgeführt. Es wurden 197 g Polyethylen entsprechend einer KA von 66 kg PE/mmol Ti und einer $KZA_{red}$ von 8,2 kg PE/mmol Ti·h·bar erhalten. Die VZ betrug 2700 cm$^3$/g, das Produkt hatte eine Schüttdichte von 360 g/dm$^3$ und einen $d_{50}$-Wert von 184 μm.

Der Quotient $D_m/D_n$ betrug 1,15.

Beispiel 3

a) Herstellung der Katalysatorkomponente A

Die Katalysatorkomponente A wurde analog Beispiel 2 hergestellt.

b) Polymerisation

Die Polymerisation wurde wie im Beispiel 2 durchgeführt. Anstelle Triisobutylaluminium wurden 2 mmol Isoprenylaluminium als Cokatalysator eingesetzt. Man erhielt 143 g Polyethylen entsprechend einer KA von 48 kg PE/mmol Ti und einer $KZA_{red}$ von 6,0 kg PE/mmol Ti·h·bar. Die VZ betrug 3100 cm$^3$/g, das Produkt hatte eine Schüttdichte von 365 g/dm$^3$ und einen $d_{50}$-Wert von 165 µm . Der Quotient $D_m/D_n$ betrug 1,18.

Beispiel 4

Die Herstellung der Katalysatorkomponente A sowie die Polymerisation wurden analog Beispiel 1 durchgeführt, mit der Ausnahme, daß die Polymerisationstemperatur 70°C betrug. Es wurden 108 g Polyethylen entsprechend einer KA von 36 kg PE/mmol Ti und einer $KZA_{red}$ von 4,5 kg PE/mmol Ti·h·bar erhalten. Die VZ betrug 3300 cm$^3$/g, das Produkt hatte eine Schüttdichte von 360 g/dm$^3$ und einen $d_{50}$-Wert von 162 µm . Der Quotient $D_m/D_n$ betrug 1,16.

Beispiel 5

a) Herstellung der Katalysatorkomponente A

Die Herstellung der Katalysatorkomponente A wurde analog Beispiel 2 durchgeführt. Der Titangehalt der Katalysatorsuspension betrug 48,5 mmol/dm$^3$. Die Katalysatorteilchen wiesen nach licht-mikroskopischen Messungen einen mittleren Durchmesser von 9,0 µm auf.

b) Polymerisation

Die Polymerisation wurde in einem 150 dm$^3$-Kessel in 100 dm$^3$ der Benzinfraktion mit 7,0 cm$^3$ der vorgenannten Katalysatorkomponente A, entsprechend 0,34 mmol Titan, mit 0,05 mol Triisobutylaluminium als Cokatalysator durchgeführt. Die Ethyleneingasmenge betrug 6,0 kg/h. Die Polymerisationstemperatur war 80°C, die Polymerisationsdauer betrug 4 h. Die Reaktion wurde durch Entspannen und Abkühlen beendet und das Polymere durch Filtration und Trocknen vom Dispergiermittel abgetrennt. Man erhielt 23,8 kg Polyethylen entsprechend einer KA von 70 kg PE/mmol Ti und einer $KZA_{red}$ von 5,3 kg PE/mmol Ti·h·bar. Die VZ betrug 3250 cm$^3$/g, das Produkt hatte eine Schüttdichte von 405 g/dm$^3$ und einen $d_{50}$-Wert von 191 µm . Der Quotient $D_m/D_n$ betrug 1,13.

Beispiel 6

a) Herstellung der Katalysatorkomponente A

Die Katalysatorkomponente A wurde analog Beispiel 3 hergestellt.

b) Gasphasenpolymerisation von Ethylen

In einem 2-dm$^3$-Stahlautoklaven mit polierten Wandflächen wurde eine Gasphasenpolymerisation von Ethylen durchgeführt. Das Wirbelbett wurde mit Hilfe eines wandgängigen Doppelwendelrührers bei einer Vorlage von 10 g Polyethylenpulver als Saatbett mechanisch erzeugt. Über eine Druckbürette wurden zunächst der Cokatalysator (2 mmol Triisobutylaluminium in 2 cm$^3$ iso-Pentan) und danach 2 cm$^3$ der Katalysatorsuspension (0,01 mmol Ti) in den Autoklaven dosiert. Nach mehrmaligem Aufdrücken von Argon und Evakuieren zur Entfernung des Suspensionsmittels wurde die Polymerisation bei 8 bar Ethylenpartialdruck bei einer Temperatur von 80°C über 2 Stunden durchgeführt und durch Entspannen des Autoklaven beendet.
207 g Polyethylen entsprechend einer KA von 20,7 kg PE/mmol Ti bzw. einer $KZA_{red}$ von 1,3 kg PE/mmol Ti·h·bar wurden erhalten. Die VZ betrug 3050 cm$^3$/g, das Produkt hatte eine Schüttdichte von 375 g/dm$^3$ und einen $d_{50}$ von 128 µm.

**Patentansprüche**

1.  Verfahren zum Herstellen einer Katalysatorkomponente zur Polymerisation und Copolymerisation von Ethylen und 1-Olefinen zu ultrahochmolekularen Ethylenhomo- oder Copolymeren in Suspension oder in der Gasphase, dadurch gekennzeichnet, daß in einer ersten Reaktionsstufe (a) eine Magnesiumverbindung der Formel I

$$R^1 \text{ - Mg - } R^2 \tag{I},$$

worin $R^1$ und $R^2$ gleich oder verschieden sind und einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeuten, mit einem Halogenierungsagens der Formel II

$$X_n \text{ - C - } R^3 \tag{II},$$

worin X ein Halogenatom, n = 3 ist und $R^3$ ein Wasserstoffatom, ein Halogenatom, einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeutet, zu einem Katalysatorträger mit einer mittleren Korngröße < 10 µm, überwiegend bestehend aus einer Verbindung der Formel III

$$X \text{ - Mg - } X \tag{III},$$

worin X ein Halogenatom bedeutet, umgesetzt wird, daß der Katalysatorträger in einer zweiten Reaktionsstufe (b) mit einer In Kohlenwasserstoffen löslichen Titanverbindung der Formel IV

$$R^4{}_m \text{ - Ti - } R^5{}_{4m} \tag{VI},$$

worin $R^4$ und $R^5$ gleich oder verschieden sind und ein Halogenatom, eine $C_1$-$C_6$-Alkoxygruppe oder einen $C_1$-$C_{20}$-Carboxyrest bedeuten und m eine Zahl von 0 bis 4 ist, in einem inerten Kohlenwasserstoff bei einer Temperatur von 0 bis 100°C im Molverhältnis Ti : Mg von 0,01 bis 1 zur Reaktion gebracht wird, wobei eine Elektronendonatorverbindung bei einer der Reaktionsstufen (a) oder (b) in einer Menge von 0,01 bis 1 mol je mol Magnesiumverbindung zugegen ist, und daß in einem abschließenden Reaktionsschritt (c) die gelöste Titanverbindung durch Reduktion mit einem Aluminiumalkyl auf dem Katalysatorträger niedergeschlagen wird.

2.  Verfahren nach Anspruch 1, dadurch gekennzeichnet, daß als Elektronendonatorverbindung Ester von Carbonsäuren, Ether, Ketone, Amide oder sauerstoffhaltige Phosphor-oder Schwefelverbindungen eingesetzt werden.

3.  Verfahren nach Anspruch 1, dadurch gekennzeichnet, daß das Molverhältnis zwischen Elektronendonator und Titanverbindung im Bereich von 0,1 bis 10 liegt.

4.  Katalysatorkomponente, hergestellt nach dem Verfahren gemäß Anspruch 1, dadurch gekennzeichnet, daß sie eine mittlere Teilchengröße von ≤ 10 um aufweist.

5.  Verwendung der Katalysatorkomponente nach Anspruch 4 zum Polymerisieren und Copolymerisieren von Ethylen und 1-Olefinen zu ultrahochmolekularen Ethylenhomo- und Copolymeren.

6.  Verfahren zum Herstellen von ultrahochmolekularen Ethylenhomo- und Copolymeren durch Polymerisation und Copolymerisation von Ethylen in Suspension oder in der Gasphase, in Gegenwart eines Mischkatalysators bestehend aus einer Übergangsmetallverbindung (Komponente A) und einer aluminiumorganischen Verbindung (Komponente B), dadurch gekennzeichnet, daß die Komponente A nach dem Verfahren gemäß Anspruch 1 hergestellt wurde.

**Claims**

1.  A process for preparing a catalyst component for the polymerization and copolymerization of ethylene and 1-olefins to give ultrahigh molecular weight ethylene homopolymers or copolymers in suspension or in the gas phase, which comprises reacting, in a first reaction step (a), a magnesium compound of the formula I

$$R^1 - Mg - R^2 \qquad (I),$$

where $R^1$ and $R^2$ are identical or different and are each a $C_1$-$C_{20}$-alkyl radical, a $C_5$-$C_{20}$-cycloalkyl radical, a $C_6$-$C_{20}$-aryl radical or a $C_2$-$C_{20}$-alkenyl radical, with a halogenating agent of the formula II

$$X_n - C - R^3 \qquad (II),$$

where X is a halogen atom, n is 3 and $R^3$ is a hydrogen atom, a halogen atom, a $C_1$-$C_{20}$-alkyl radical, a $C_5$-$C_{20}$-cycloalkyl radical, a $C_6$-$C_{20}$-aryl radical or a $C_2$-$C_{20}$-alkenyl radical, to give a catalyst support having a mean particle size < 10 μm and consisting predominantly of a compound of the formula III

$$X - Mg - X \qquad (III),$$

where X is a halogen atom, reacting the catalyst support, in a second reaction step (b), with a hydrocarbon-soluble titanium compound of the formula IV

$$R^4{}_m - Ti - R^5{}_{4-m} \qquad (IV),$$

where $R^4$ and $R^5$ are identical or different and are each a halogen atom, a $C_1$-$C_6$-alkoxy group or a $C_1$-$C_{20}$-carboxy radical and m is a number from 0 to 4, in an inert hydrocarbon at a temperature of from 0 to 100°C in a molar ratio Ti:Mg of from 0.01 to 1, with an electron donor compound being present in one of the reaction steps (a) or (b) in an amount of from 0.01 to 1 mol per mol of magnesium compound, and precipitating, in a final reaction step (c), the dissolved titanium compound on to the catalyst support by reduction with an aluminum alkyl.

2. The process as claimed in claim 1, wherein the electron donor compound used is an ester of a carboxylic acid, an ether, a ketone, an amide or an oxygen-containing phosphorus or sulfur compound.

3. The process as claimed in claim 1, wherein the molar ratio between electron donor and titanium compound is in the range from 0.1 to 10.

4. A catalyst component prepared by the process as claimed in claim 1, which has a mean particle size of ≤ 10 μm.

5. The use of the catalyst component as claimed in claim 4 for the polymerization and copolymerization of ethylene and 1-olefins to give ultrahigh molecular weight ethylene homopolymers and copolymers.

6. A process for preparing ultrahigh molecular weight ethylene homopolymers and copolymers by polymerization and copolymerization of ethylene in suspension or in the gas phase, in the presence of a mixed catalyst comprising a transition metal compound (component A) and an organoaluminum compound (component B), wherein the component A has been prepared by the process as claimed in claim 1.

**Revendications**

1. Procédé de préparation d'un composant de catalyseur pour la polymérisation et la copolymérisation d'éthylène et de 1-oléfines en polymères ou copolymères d'éthylène à ultra-haut poids moléculaire, en suspension ou dans la phase gazeuse, caractérisé en ce que, dans une première étape de réaction (a), un composé de magnésium de formule I

$$R^1 - Mg - R^2 \qquad (I),$$

dans laquelle $R^1$ et $R^2$ peuvent être identiques ou différents et représentent un radical alkyl $C_1$-$C_{20}$, un radical cycloalkyl $C_5$ - $C_{20}$, un radical aryl $C_6$-$C_{20}$ ou un radical alcényl $C_2$ - $C_{20}$, réagit avec un agent d'halogénation de formule II

$$X_n - C - R^3 \qquad \text{(II)},$$

dans laquelle X représente un atome d'halogène, n = 3 et $R^3$ un atome d'hydrogène, un radical alkyl $C_1$-$C_{20}$, un radical cycloalkyl $C_5$ - $C_{20}$, un radical aryl $C_6$ - $C_{20}$ ou un radical alcényl $C_2$ - $C_{20}$, d'une granulométrie moyenne inférieure à 10 μm, pour former un support de catalyseur principalement constitué d'un composé de formule III

$$X - Mg - X \qquad \text{(III)},$$

dans laquelle X représente un atome d'halogène, et en ce que le support de catalyseur, dans une deuxième étape (b) de réaction, est mis en réaction avec un composé de titane soluble dans les hydrocarbures et de formule IV

$$R^4{}_m - Ti - R^5{}_{4-m} \qquad \text{(IV)}$$

dans laquelle $R^4$ et $R^5$ peuvent être identiques ou différents et représentent un atome d'halogène, un groupement alkoxy $C_1$-$C_6$ ou un radical carboxy $C_1$-$C_{20}$ et m est un chiffre de 0 à 4, dans un solvant organique (hydrocarbure) inerte à une température de 0 à 100°C et avec une proportion Ti:Mg de 0,01 à 1, avec addition dans l'étape (a) ou (b) de la réaction d'un donneur d'électrons à raison de 0,01 à 1 mole par mole de composé de magnésium, et en ce que, dans une troisième étape (c) de réaction, le composé de titane en solution est précipité sur le support de catalyseur par un alumino-alkyle.

2. Procédé selon la revendication 1, caractérisé en ce que le donneur d'électrons utilisé est un ester d'acide carboxylique, un éther, une cétone, une amide ou un composé oxygéné de phosphore ou de soufre.

3. Procédé selon la revendication 1, caractérisé en ce que la proportion molaire entre le donneur d'électrons et le composé de titane se situe dans une plage de 0,1 à 10.

4. Composants de catalyseur, préparés selon le procédé de la revendication 1, caractérisés en ce qu'ils présentent une granulométrie moyenne égale ou inférieure à 10 μm.

5. Application des composants de catalyseur selon la revendication 4 à la polymérisation et la copolymérisation d'éthylène et de 1-oléfines en homo-et copolymères d'éthylène à ultra-haut poids moléculaire.

6. Procédé de préparation d'homo- et copolymères d'éthylène à ultra-haut poids moléculaire par polymérisation et copolymérisation de l'éthylène en suspension ou en phase gazeuse, en présence d'un catalyseur mixte constitué d'un composé métallique de transition (composant A) et d'un composé alumino-organique (composant B), caractérisé en ce que le composant A est préparé par le procédé selon la revendication 1.